(19) Europäisches Patentamt
European Patent Office
Office européen des brevets

(11) **EP 1 040 873 B1**

(12) **FASCICULE DE BREVET EUROPEEN**

(45) Date de publication et mention
de la délivrance du brevet:
**20.11.2002 Bulletin 2002/47**

(51) Int Cl.⁷: **B05C 17/06**, B29C 45/14,
A45D 44/00

(21) Numéro de dépôt: **00400477.6**

(22) Date de dépôt: **22.02.2000**

(54) **Pochoir, notamment pour le maquillage des cheveux, et son procédé de fabrication**

Schablone, insbesondere zum Schminken von Haaren, und deren Herstellungsverfahren

Stencil, particularly for making up hairs and its manufacturing method

(84) Etats contractants désignés:
**AT BE CH CY DE DK ES FI FR GB GR IE IT LI LU MC NL PT SE**

(30) Priorité: **31.03.1999 FR 9904044**

(43) Date de publication de la demande:
**04.10.2000 Bulletin 2000/40**

(73) Titulaire: **L'OREAL**
**75008 Paris (FR)**

(72) Inventeur: **De Laforcade, Vincent**
**78120 Rambouillet (FR)**

(74) Mandataire: **Boulard, Denis**
**L'OREAL-DPI**
**6 rue Bertrand Sincholle**
**92585 Clichy Cédex (FR)**

(56) Documents cités:
**CH-A- 129 360**      **DE-A- 3 615 741**
**FR-A- 741 394**      **FR-A- 783 924**
**FR-A- 2 234 107**      **US-A- 1 618 216**

## Description

La présente invention a trait à un pochoir du type comportant un support formant un dessin ou motif destiné à être reporté sur une surface à imprimer, de profil non plan, et en particulier, de profil bombé. Le pochoir selon l'invention est tout particulièrement adapté à la réalisation de dessins ou motifs d'impression sur les cheveux ou sur certaines parties du corps.

Les pochoirs ont été largement utilisés pour réaliser des dessins ou motifs d'impression sur des surfaces planes. Typiquement, un tel pochoir est réalisé à partir d'un support relativement rigide, dans laquelle on découpe le motif à réaliser. Le document DE 3615741 A1 décrit un tel pochoir. On applique le support sur l'élément à décorer, et on applique un matériau de coloration de manière à déposer ledit matériau de coloration sur la surface à imprimer, et ce, selon le motif défini par le dessin réalisé dans le support. Le matériau de coloration peut être appliqué au moyen d'un pinceau ou d'un applicateur, notamment du type à mousse alvéolaire percée en son centre d'un canal, en communication avec un récipient sur laquelle la mousse est montée. Cette technologie est utilisée notamment pour la décoration d'intérieur ou dans le domaine cosmétique pour le maquillage corporel. Elle fonctionne de manière tout à fait satisfaisante lorsqu'il s'agit de décorer une surface plane ou sensiblement plane.

Les problèmes apparaissent quand il s'agit d'utiliser cette technique pour la décoration de surfaces non planes, telles que la chevelure, ou certaines surfaces bombées du corps. En effet, en utilisant un pochoir rigide du type de celui décrit précédemment, on applique aisément le centre du motif à l'endroit voulu, mais, en raison de la courbure du crâne, les bords du motif ne sont pas dessinés de manière nette.

La réalisation du pochoir à partir d'un support en matériau souple ne résout pas le problème de manière satisfaisante dans la mesure où son utilisation requiert de maintenir le pochoir en place sur le crâne tout en appliquant le produit. L'expérience montre que, notamment en raison de la difficulté à maintenir le support souple en position sur la tête, il est difficile de s'appliquer le produit sur les cheveux sans faire appel à l'aide une tierce personne.

Aussi, est-ce un des objets de l'invention que de réaliser un pochoir, adapté à la décoration ou au maquillage de surfaces non planes, et qui résolve en tout ou partie les problèmes discutés ci-avant.

C'est en particulier un objet de l'invention que de réaliser un pochoir, adapté notamment au maquillage de la chevelure ou au maquillage corporel, et que la consommatrice peut utiliser sans requérir l'aide d'une tierce personne.

C'est un autre objet de l'invention que de réaliser un pochoir simple d'utilisation et qui soit économique à réaliser.

D'autres objets encore apparaîtront dans la description détaillée qui suit.

Selon l'invention, ces objets sont atteints en réalisant un pochoir comprenant une feuille souple, portant un motif à reproduire sur une surface bombée, et dont une zone, située au voisinage d'un bord périphérique, est fixée à un cadre rigide sous forme d'un élément annulaire, ladite feuille souple étant montée sur le cadre rigide de manière à former un dôme à l'intérieur dudit cadre.

Ainsi, le cadre rigide permet de positionner et de maintenir aisément le pochoir à l'endroit souhaité, notamment sur le crâne. La feuille souple portant le dessin à reproduire, est conformée en permanence à la courbure de la surface à décorer. Le geste est simple, et l'application peut être effectuée sans avoir recours à l'utilisation d'une tierce personne. A titre indicatif, le pochoir peut avoir un diamètre qui peut être de l'ordre de 10 cm à 15 cm. La rigidité du cadre est au moins telle, que celui-ci reste en forme en l'absence de contrainte sensible, et en particulier, ne se déforme pas sous l'effet de son propre poids. Le rayon de courbure formé par le dôme de la feuille souple est du même ordre que le rayon de courbure de la surface à décorer, de sorte que la totalité du dessin puisse s'appliquer sur la surface à traiter.

La feuille souple est de préférence non élastiquement déformable (dans le cas d'une feuille à plusieurs couches, l'une au moins des couches est réalisée en un matériau non élastiquement déformable) de sorte que, le motif, réalisé par enlèvement de matière, ne se déforme pas lors de l'application.

De préférence, ladite zone de fixation périphérique de la feuille souple au cadre présente un bord intérieur et un bord extérieur, le bord intérieur étant de rayon R, inférieur au rayon R+ε que formerait la portion de feuille souple s'étendant à l'intérieur dudit bord intérieur, si ladite feuille souple n'était pas solidaire du cadre.

Avantageusement, $1{,}01{*}R \le R{+}\varepsilon \le 1{,}05{*}R$.

De préférence encore, $1{,}01{*}R \le R{+}\varepsilon \le 1{,}02{*}R$.

De telles différences de rayons sont particulièrement avantageuses, en ce qu'elles peuvent être obtenues de manière totalement naturelle par un phénomène dit de "post-retrait" que l'on observe lors du moulage de matériaux tels que les matériaux thermoplastiques, et qui généralement, dans le domaine du moulage, est vu comme une contrainte qu'il faut intégrer au processus de moulage quand on en détermine les paramètres de fonctionnement.

Le document FR 7421260 décrit un procédé de moulage qui utilise l'effet du "post-retrait" pour le moulage d'un couvercle de récipient.

Avantageusement, le cadre est formé d'au moins deux parties pouvant être repliées l'une sur l'autre. Ainsi, on réalise une structure permettant d'obtenir un motif d'impression de taille relativement importante (notamment, de 10 à 15 cm), mais pliable de manière à être d'encombrement réduit en position de stockage. A cet effet, lesdites parties du cadre annulaire peuvent être reliées entre elles par une articulation, notamment de type charnière film.

Selon un mode préféré de l'invention, le cadre rigide est obtenu de moulage d'un premier matériau thermoplastique dans un moule, dans un plan duquel est maintenue ladite feuille souple, préalablement formée et découpée aux dimensions et à la forme souhaitées, ladite feuille présentant au moins une couche d'un second matériau thermoplastique physico-chimiquement compatible avec le premier matériau, de manière à permettre la fixation du cadre à la feuille souple, le long de ladite zone de fixation périphérique. Des matériaux physico-chimiquement compatibles sont des matériaux qui sont aptes, à l'état de fusion ou de ramollissement, à se souder entre eux.

Cette caractéristique du pochoir selon l'invention est tout particulièrement avantageuse en ce qu'elle permet d'obtenir un dôme uniforme, autorisant l'obtention d'un motif d'impression aux contours très nets. En effet, l'effet avantageux d'une telle caractéristique procède du phénomène de "post-retrait" discuté précédemment, et que l'on observe dans les processus de moulage de matériaux, notamment thermoplastiques.

Dans la pratique, la réalisation du pochoir par moulage, en utilisant une technique similaire à la technique dite d'IML (In-Mold Labelling), connue dans le domaine de l'étiquetage de certains objets en matériaux thermoplastiques, notamment des flacons, est avantageuse à plusieurs titres.

Elle permet, d'une part, la fixation du bord périphérique de la feuille sur le cadre rigide, d'une manière parfaitement uniforme, sans pli ou autres irrégularités. En effet, la fixation (qui se fait par une "fusion" localisée des matériaux compatibles entre eux) du bord périphérique de la feuille souple sur le cadre annulaire, se produit de manière quasi instantanée lors de l'injection sous pression du premier matériau en fusion, et ce, avec une feuille maintenue à plat dans le moule. De préférence, ladite zone de fixation s'étend de manière continue sur 360°.

D'autre part, en raison du "post-retrait" de la matière formant le cadre, la feuille, dont le bord périphérique a été préalablement rendu solidaire du cadre rigide, est contrainte, sous l'effet de forces centripètes s'appliquant uniformément sur 360°, à se déformer sous forme d'un dôme homogène, apte notamment à épouser sensiblement la courbure du crâne. Ces forces centripètes, s'exerçant de manière uniforme sur 360°, se traduisent en effet par une légère diminution du diamètre du cadre, laquelle diminution provoque la conformation permanente de la feuille sous forme dudit dôme.

Dans la pratique, la fixation du bord périphérique de la feuille souple au cadre, en particulier dans un moule refroidi, s'opère de manière quasi-instantanée dans le moule, tandis que le phénomène de "post-retrait" s'étend sur une durée qui peut aller jusqu'à 48 heures, donc bien après que la feuille ait été fixée de manière inamovible au cadre. Ce phénomène de "post-retrait" s'opère bien évidemment dans toutes les directions de l'espace, mais est sensible surtout sur la plus grande dimension de l'objet moulé, à savoir sur la circonférence. Pour un cadre annulaire d'un diamètre de 100 mm à 150 mm, la diminution de diamètre peut, en fonction du matériau utilisé et des conditions de moulage, être de l'ordre de 1 mm à 7,5 mm.

Avantageusement, le premier matériau thermoplastique est une polyoléfine, choisie notamment parmi les polyéthylènes, les polypropylènes, les polyacétates ou les polycarbonates.

Avantageusement encore, la feuille souple comporte au moins deux couches dont une première est réalisée avec ledit second matériau thermoplastique, et dont une seconde couche, apte notamment à former une couche de décor, est réalisée en un matériau tel que le papier ou le polyéthylène téréphtalate. Le phénomène de "post retrait" ne s'opère pas sur la feuille souple dans la mesure où celle-ci est maintenue à une température inférieure à la température de ramollissement ou fusion du matériau thermoplastique qui la compose, à l'exception de la zone très localisée de sa périphérie où la "soudure" est faite avec le cadre. De ce fait, on observe aucune diminution sensible du diamètre de la feuille, qui n'a donc d'autre choix que de se conformer sous forme du dôme recherché.

Le pochoir selon l'invention est utilisé avantageusement pour le maquillage des cheveux ou du corps.

Selon un autre aspect de l'invention, on réalise un procédé de fabrication d'un pochoir comprenant une feuille souple, portant un motif à reproduire sur une surface bombée, et dont une zone située au voisinage d'un bord périphérique, est fixée à un cadre rigide, sous forme d'un élément annulaire, ledit procédé consistant à réaliser le cadre, de moulage d'un premier matériau thermoplastique, dans un moule, dans un plan duquel est maintenue ladite feuille souple, préalablement formée et découpée aux dimensions et à la forme souhaitées, ladite feuille présentant au moins une couche d'un second matériau thermoplastique physico-chimiquement compatible avec le premier matériau, de manière à permettre la fixation du cadre à la feuille souple, le long de ladite zone de fixation périphérique, une diminution du diamètre dudit cadre ainsi fixé à la feuille souple, sous l'effet du "post retrait" dudit premier matériau, provoquant la formation d'un dôme par ladite feuille souple à l'intérieur du cadre. Les premier et second matériaux thermoplastiques peuvent être identiques ou différents, la seule condition étant qu'ils soient compatibles entre eux.

De manière plus spécifique, le procédé peut consister à :

a) disposer dans un moule ladite feuille souple, préalablement formée et découpée aux dimensions et à la forme souhaitées, le moule étant maintenu à température inférieure à la température de ramollissement dudit second matériau thermoplastique ;

b) dans une zone annulaire du moule, injecter sous pression le premier matériau thermoplastique, de manière à former ledit cadre, ladite zone annulaire étant disposée de sorte que, lors du moulage du cadre, la feuille souple soit soudée à ce dernier le long de ladite zone de fixation périphérique ; et

c) démouler le pochoir.

Le moule est de préférence du type à deux parties séparables. Ladite feuille souple peut être maintenue en position dans le moule par aspiration. Le moule peut être maintenu à une température voisine de 45 °C, le premier matériau thermoplastique pouvant être injecté dans ladite zone annulaire du moule à une température comprise entre 180 °C et 240 °C.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :

- les figures 1A-1B illustrent un pochoir selon un premier mode de réalisation de l'invention ;
- les figures 2A-2C illustrent un mode de réalisation du procédé de fabrication du pochoir représenté aux figures 1A-1B ; et
- la figure 3 représente une variante du mode de réalisation des figures 1A et 1B.

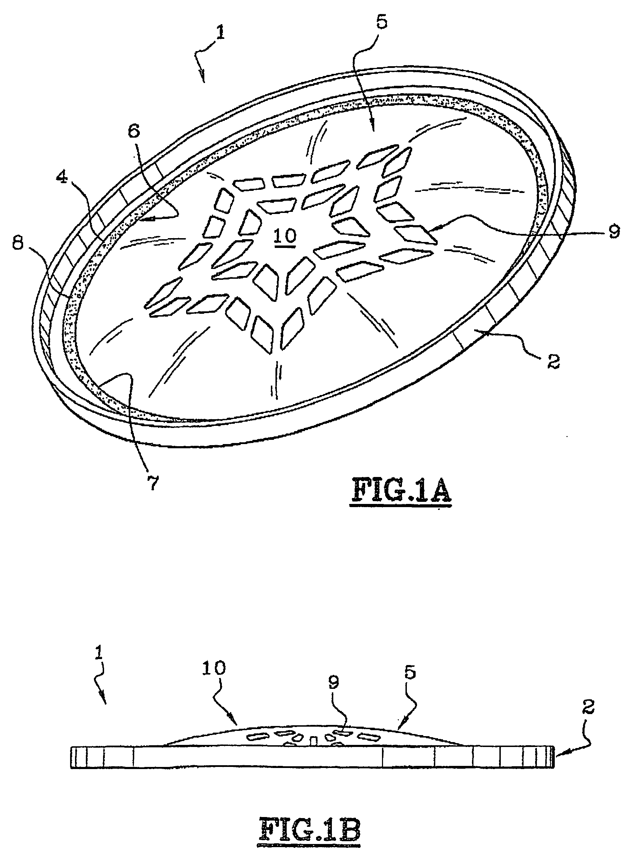

Tel que représenté aux figures 1A et 1B, et 2A-2C qui en illustrent un procédé de fabrication, le pochoir 1 comprend un cadre annulaire 2 de contour extérieur circulaire, dont une portion de surface annulaire 3 est soudée au bord périphérique 4 d'une feuille souple 5 en matériau non élastiquement déformable, via une zone de soudure annulaire 6, ladite feuille souple étant disposée à l'intérieur du cadre 2. La portion de surface 3 sur laquelle est formée la zone de soudure 6 est disposée sensiblement dans le plan dans lequel s'étend la feuille souple 5 lors du moulage, et se prolonge par une portion dont la section forme un V dont une extrémité libre se situe sensiblement dans le plan de la portion de surface 3.

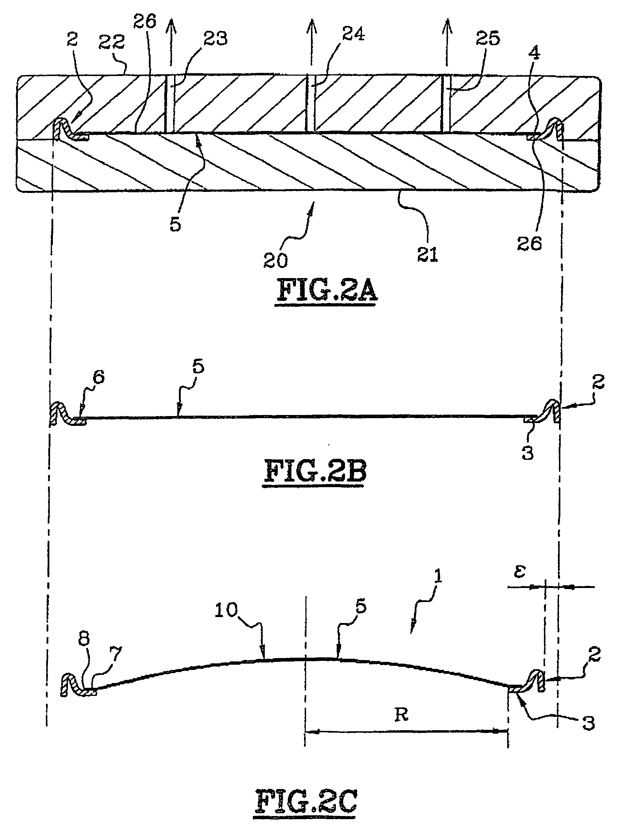

La feuille souple 5 présente en son centre un certain nombre de découpes définissant un dessin 9, destiné à former un motif de coloration correspondant sur une surface à décorer, en l'occurrence, les cheveux. La zone de soudure 6 est délimitée par un bord intérieur 7 et un bord extérieur 8. Le bord intérieur 7 est de rayon R, inférieur au rayon que formerait la portion de feuille souple s'étendant à l'intérieur dudit bord intérieur, si ladite feuille souple n'était pas solidaire du cadre 2, de sorte que, comme il apparaît clairement aux figures 1B et 2C, la feuille souple 5 forme un dôme 10 à l'intérieur du cadre 2. A titre indicatif, le bord intérieur 7 de la zone de soudure 6 présente un rayon R qui est de l'ordre de 57 mm, tandis que la portion de feuille souple s'étendant à l'intérieur dudit bord intérieur 7, a un rayon qui est de l'ordre de 59 mm, cette différence de rayon s'avérant suffisante pour que la feuille souple 5 portant le motif 9 forme un dôme apte à se conformer au profil du crâne de l'utilisatrice. Cette différence de rayon correspond sensiblement au ε auquel il sera fait référence par la suite.

Selon un mode de réalisation spécifique, le cadre 2 est réalisé en polypropylène. La feuille souple 5 est formée d'un complexe de papier et de polypropylène, la couche de polypropylène étant positionnée en regard de la portion de surface 3 du cadre 2.

Dans les figures 2A-2C, est illustré un mode de réalisation d'un pochoir 1 selon l'invention. Comme il apparaît clairement à la figure 2A, on utilise un moule 20 en deux parties 21, 22, escamotables l'une par rapport à l'autre. L'une 22 des deux parties du moule 20 présente des canaux 23-25 reliés à une source d'aspiration (non représentée) et débouchant sur une face plane 26 située dans un plan de fermeture du moule 20. En position ouverte du moule, la feuille souple 5 est positionnée contre la face 26 de la partie 22 du moule, où elle est maintenue par aspiration. En refermant le moule de la manière représentée à la figure 2A, les deux parties 21, 22 du moule 20 définissent tout autour de la feuille 5 un espace annulaire 26 apte à recevoir la matière en fusion destinée à former le cadre rigide ou semi rigide 2 du pochoir. L'espace 26 présente une zone de recouvrement avec le bord périphérique 4 de la feuille 5, de manière à définir la zone de soudure 6 entre la feuille souple 5 et le cadre annulaire 2.

Après avoir positionné la feuille souple 5 dans le moule 20, de la manière indiquée précédemment, et après avoir refermé le moule 20, le matériau destiné à former le cadre 2 est injecté sous pression à une température de l'ordre de 200 °C dans l'espace 26. Le moule est maintenu refroidi en permanence à une température de l'ordre de 45 °C. En raison de la différence de température, la matière en fusion se fige de manière quasi-instantanée dans l'espace 26 en se soudant au bord périphérique 4 de la feuille souple 5.

On procède alors au démoulage du pochoir qui, à la sortie du moule 20, est sous la forme illustrée à la figure 2B. Dans cette position, le cadre rigide ou semi rigide 2 est de diamètre extérieur sensiblement égal au diamètre extérieur de la cavité annulaire 26 délimitée par les deux parties 21 et 22 du moule 20. La feuille souple 5 est tendue à l'intérieur du cadre 2, auquel elle est fixée de manière continue et sans plis, le long de la zone de soudure annulaire 6.

Après plusieurs heures, sous l'effet du phénomène de "post retrait" discuté précédemment, le diamètre du cadre 2 a diminué de quelques millimètres, contraignant la feuille souple 5 à former un dôme uniforme 10 au centre duquel se trouve le motif 9 à former sur les cheveux. La diminution du diamètre du cadre 2 correspond à deux fois la valeur ε figurant sur la figure 2C.

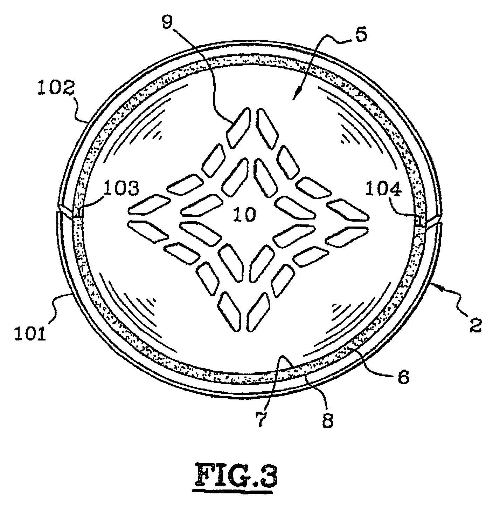

Dans le mode de réalisation de la figure 3, le cadre 2 du pochoir 1 est formé de deux portions en demi cercle 101, 102 discontinues, et séparées par des charnières-film 103, 104 disposées à 180°. Le pochoir selon ce mode de réalisation est obtenu en utilisant le même procédé que celui décrit en référence aux figures 2A-2C, avec toutefois une cavité de moule 20 de forme légèrement différente en raison de la réalisation du moule en deux parties articulées. La présence du cadre rigide ou semi rigide en deux parties, articulées autour d'un axe passant par les deux charnières-film 103, 104, permet de réaliser une structure pouvant être repliée en position de stockage, et donc, d'encombrement réduit. Bien que n'apparaîssant pas sur le dessin, des moyens, du type comportant un ergot apte à venir s'encliqueter dans un évidement correspondant, sont prévus pour immobiliser de façon réversible les deux parties dans leur position à 180° représentée à la figure 3.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Pochoir (1) comprenant une feuille souple (5), portant un motif (9) à reproduire sur une surface bombée, et dont une zone (6) située au voisinage d'un bord périphérique (4) est fixée à un cadre rigide (2), sous forme d'un élément annulaire, **caractérisé en ce que** la feuille souple (5) est montée sur le cadre rigide (2) de manière à former un dôme (10) à l'intérieur dudit cadre (2).

2. Pochoir selon la revendication 1 **caractérisé en ce que** ladite zone de fixation périphérique (6) de la feuille souple (5) au cadre rigide (2) présente un bord intérieur (7) et un bord extérieur (8), le bord intérieur (7) étant de rayon R inférieur au rayon R+$\varepsilon$ que formerait la portion de feuille souple (5) s'étendant à l'intérieur dudit bord intérieur (7), si ladite feuille souple (5) n'était pas solidaire du cadre (2).

3. Pochoir selon la revendication 1 ou 2 **caractérisé en ce que** :

$$1{,}01 * R \leq R + \varepsilon \leq 1{,}05 * R \,;$$

et de préférence :

$$1{,}01 * R \leq R + \varepsilon \leq 1{,}02 * R.$$

4. Pochoir selon l'une quelconque des revendications 1 à 3 **caractérisé en ce que** le cadre (2) est formé d'au moins deux parties (101, 102) pouvant être repliées l'une sur l'autre.

5. Pochoir selon la revendication 4 **caractérisé en ce que** lesdites parties (101, 102) du cadre annulaire (2) sont reliées entre elles par une articulation, notamment de type charnière film (103, 104).

6. Pochoir selon l'une quelconque des revendications 1 à 5 **caractérisé en ce que** ladite zone de fixation (6) s'étend de manière continue sur 360°.

7. Pochoir selon l'une quelconque des revendications 1 à 6 **caractérisé en ce que** la feuille souple (5) est non élastiquement déformable.

8. Pochoir selon l'une quelconque des revendications 1 à 7 **caractérisé en ce que** le cadre (2) est obtenu de moulage d'un premier matériau thermoplastique dans un moule (20), dans un plan duquel est maintenue ladite feuille souple (5), préalablement formée et découpée aux dimensions et à la forme souhaitées, ladite feuille (5) présentant au moins une couche d'un second matériau thermoplastique physico-chimiquement compatible avec le premier matériau, de manière à permettre la fixation du cadre (2) à la feuille souple (5) le long de ladite zone de fixation périphérique (6).

9. Pochoir selon la revendication 8 **caractérisé en ce que** le premier matériau thermoplastique est une polyoléfine choisie notamment parmi les polyéthylènes, les polypropylènes, les polyacétates ou les polycarbonates.

10. Pochoir selon la revendication 8 ou 9 **caractérisé en ce que** la feuille souple (5) comporte au moins deux couches dont une première est réalisée avec ledit second matériau thermoplastique, et dont une seconde couche, apte notamment à former une couche de décor, est réalisée en un matériau tel que le papier ou le polyéthylène téréphtalate.

11. Utilisation d'un pochoir (1) selon l'une quelconque des revendications 1 à 10 pour le maquillage des cheveux ou du corps.

12. Procédé de fabrication d'un pochoir (1) comprenant une feuille souple (5), portant un motif (9) à imprimer sur une surface bombée, et dont une zone (6) située au voisinage d'un bord périphérique (4), est fixée à un cadre rigide (2), sous forme d'un élément annulaire, ledit procédé consistant à réaliser le cadre (2), de moulage d'un premier matériau thermoplastique, dans un moule (20), dans un plan duquel est maintenue ladite feuille souple (5), préalablement formée et découpée aux dimensions et à la forme souhaitées, ladite feuille (5) présentant au moins une couche d'un second matériau thermoplastique physico-chimiquement compatible avec le premier matériau, de manière à permettre la fixation du cadre (2) à la feuille souple (5) le long de ladite zone de fixation périphérique (6), une diminution du diamètre dudit cadre (2) ainsi fixé à la feuille souple (5), sous l'effet du "post retrait" dudit premier matériau, provoquant la formation d'un dôme (10) par ladite feuille souple (5) à l'intérieur du cadre (2).

13. Procédé selon la revendication 12 **caractérisé en ce qu'**il consiste à :

a) disposer dans un moule (20) ladite feuille souple (5) préalablement formée et découpée aux dimensions et à la forme souhaitées, le moule (20) étant maintenu à température inférieure à la température de ramollissement dudit second matériau thermoplastique ;

b) dans une zone annulaire (26) du moule, injecter sous pression le premier matériau thermoplastique de manière à former ledit cadre (2), ladite zone annulaire (26) étant disposée de sorte que, lors du moulage du cadre (2), la feuille souple (5) soit soudée à ce dernier (2) le long de ladite zone de fixation périphérique (6) ; et

c) démouler le pochoir (1).

14. Procédé selon la revendication 12 ou 13 **caractérisé en ce que** ladite feuille souple (5) est maintenue dans le moule (20) par aspiration (23-25).

15. Procédé selon l'une quelconque des revendications 12 à 14 **caractérisé en ce que** le moule (20) est maintenu à une température voisine de 45 °C, le premier matériau thermoplastique étant injecté dans ladite zone annulaire (26) du moule (20) à une température comprise entre 180 °C et 240 °C.

16. Procédé selon l'une quelconque des revendications 12 à 15 **caractérisé en ce que** le premier matériau thermoplastique est une polyoléfine choisie notamment parmi les polyéthylènes, les polypropylènes, les polyacétates ou les polycarbonates.

17. Procédé selon l'une quelconque des revendications 12 à 16 **caractérisé en ce que** la feuille souple (5) comporte au moins deux couches dont une première est réalisée avec ledit second matériau thermoplastique, et dont une seconde couche, apte notamment à former une couche de décor, est réalisée en un matériau tel que le papier ou le polyéthylène téréphtalate.

## Claims

1. Stencil (1) comprising a flexible sheet (5) bearing a pattern (9) that is to be reproduced on a convex surface, and of which one region (6), located near a peripheral edge (4), is attached to a rigid surround (2) in the form of an annular element, **characterized in that** the flexible sheet (5) is mounted on the rigid surround (2) in such a way as to form a dome (10) inside the said surround (2).

2. Stencil according to Claim 1, **characterized in that** the said peripheral region (6) by which the flexible sheet (5) is attached to the rigid surround (2) has an inner edge (7) and an outer edge (8), the inner edge (7) having a radius R smaller than the radius R+ε which that portion of the flexible sheet (5) that extends inside the said inner edge (7) would form if the said flexible sheet (5) were not secured to the surround (2).

3. Stencil according to Claim 1 or 2, **characterized in that**:

$$1.01 \times R \leq R+\varepsilon \leq 1.05 \times R$$

and preferably:

$$1.01 \times R \leq R+\varepsilon \leq 1.02 \times R.$$

4. Stencil according to any one of Claims 1 to 3, **characterized in that** the surround (2) is formed of at least two parts (101, 102) which can be folded one onto the other.

5. Stencil according to Claim 4, **characterized in that** the said parts (101, 102) of the annular surround (2) are connected together by an articulation, particularly of the film hinge type (103, 104).

6. Stencil according to any one of Claims 1 to 5, **characterized in that** the said attachment region (6) extends continuously over 360°.

7. Stencil according to any one of Claims 1 to 6, **characterized in that** the flexible sheet (5) is not elastically deformable.

8. Stencil according to any one of Claims 1 to 7, **characterized in that** the surround (2) is obtained by moulding a first thermoplastic in a mould (20), in one plane of which the said flexible sheet (5), already formed and cut to the desired size and shape, is held, the said sheet (5) having at least one layer of a second thermoplastic which is physico-chemically compatible with the first thermoplastic, so as to allow the surround (2) to attach to the flexible sheet (5) along the said peripheral attachment region (6).

9. Stencil according to Claim 8, **characterized in that** the first thermoplastic is a polyolefin chosen, in particular, from polyethylenes, polypropylenes, polyacetates and polycarbonates.

10. Stencil according to Claim 8 or 9, **characterized in that** the flexible sheet (5) includes at least two layers, of which a first is made with the said second thermoplastic, and of which a second layer, capable in particular of forming a decorative layer, is made of a material such as paper or polyethylene terephthalate.

11. Use of a stencil (1) according to any one of Claims 1 to 10 for applying make-up to the hair or to the body.

12. Method for manufacturing a stencil (1) comprising a flexible sheet (5) bearing a pattern (9) that is to be printed on a convex surface, and of which one region (6), located near a peripheral edge (4), is attached to a rigid surround (2) in the form of an annular element, the said method consisting in producing the surround (2), by moulding a first thermoplastic in a mould (20), in one plane of which the said flexible sheet (5), already formed and cut to the desired size and shape, is held, the said sheet (5) having at least one layer of a second thermoplastic which is physico-chemically compatible with the first thermoplastic, so as to allow the surround (2) to attach to the flexible sheet (5) along the said peripheral attachment region (6), a reduction in the diameter of the said surround (2) thus attached to the flexible sheet (5), under the effect of the "post-shrinkage" of the said first thermoplastic, causing the said flexible sheet (5) to form a dome (10) inside the surround (2).

13. Method according to Claim 12, **characterized in that** it consists in:

a) placing the said flexible sheet (5), already formed and cut to the desired size and shape, in a mould (20), the mould (20) being kept at a temperature below the softening temperature of the said second thermoplastic;
b) injecting the first thermoplastic under pressure into an annular region (26) of the mould so as to form the said surround (2), the said annular region (26) being arranged in such a way that as the surround (2) is moulded, the flexible sheet (5) becomes welded to the latter (2) along the said peripheral attachment region (6); and
c) demoulding the stencil (1).

14. Method according to Claim 12 or 13, **characterized in that** the said flexible sheet (5) is held in the mould (20) by suction (23-25).

15. Method according to any one of Claims 12 to 14, **characterized in that** the mould (20) is kept at a temperature close to 45°C, the first thermoplastic being injected into the said annular region (26) of the mould (20) at a temperature of between 180°C and 240°C.

16. Method according to any one of Claims 12 to 15, **characterized in that** the first thermoplastic is a polyolefin chosen, in particular, from polyethylenes, polypropylenes, polyacetates and polycarbonates.

17. Method according to any one of Claims 12 to 16, **characterized in that** the flexible sheet (5) includes at least two layers, of which a first is made with the said second thermoplastic, and of which a second layer, capable in particular of forming a decorative layer, is made of a material such as paper. or polyethylene terephthalate.

**Patentansprüche**

1. Schablone (1), die eine geschmeidige Folie (5) aufweist, die ein auf einer gewölbten Oberfläche zu reproduzierendes Motiv (9) trägt, und von der eine Zone (6), die sich in der Nähe eines Umfangsrands (4) befindet, an einem steifen Rahmen (2) in Form eines ringförmigen Elements befestigt ist, **dadurch gekennzeichnet, daß** die geschmeidige Folie (5) so am steifen Rahmen (2) befestigt ist, daß sie innerhalb des Rahmens (2) eine Kuppel (10) bildet.

2. Schablone nach Anspruch 1, **dadurch gekennzeichnet, daß** die Umfangsbefestigungszone (6) der geschmeidigen Folie (5) am steifen Rahmen (2) einen Innenrand (7) und einen Außenrand (8) aufweist, wobei der Innenrand (7) einen Radius R kleiner als der Radius R+ε aufweist, den der Abschnitt der geschmeidigen Folie (5), der sich innerhalb des Innenrands (7) befindet, bilden würde, wenn die geschmeidige Folie (5) nicht fest mit dem Rahmen (2) verbunden wäre.

3. Schablone nach Anspruch 1 oder 2, **dadurch gekennzeichnet, daß**:

$$1{,}01*R \leq R+\varepsilon \leq 1{,}05*R$$

und vorzugsweise

$$1{,}01*R \leq R+\varepsilon \leq 1{,}02*R.$$

**4.** Schablone nach einem der Ansprüche 1 bis 3, **dadurch gekennzeichnet, daß** der Rahmen (2) von mindestens zwei Teilen (101, 102) gebildet wird, die aufeinander umgefaltet werden können.

**5.** Schablone nach Anspruch 4, **dadurch gekennzeichnet, daß** die Teile (101, 102) des ringförmigen Rahmens (2) miteinander über ein Gelenk verbunden sind, insbesondere von der Art Folienscharnier (103, 104).

**6.** Schablone nach einem der Ansprüche 1 bis 5, **dadurch gekennzeichnet, daß** die Befestigungszone (6) sich kontinuierlich über 360° erstreckt.

**7.** Schablone nach einem der Ansprüche 1 bis 6, **dadurch gekennzeichnet, daß** die geschmeidige Folie (5) elastisch nicht verformbar ist.

**8.** Schablone nach einem der Ansprüche 1 bis 7, **dadurch gekennzeichnet, daß** der Rahmen (2) durch Formen eines ersten thermoplastischen Materials in einer Form (20) erhalten wird, wobei in einer Ebene dieser Form die geschmeidige Folie (5) gehalten wird, die vorher auf die gewünschten Abmessungen und Form geformt und ausgeschnitten wurde, wobei die Folie (5) mindestens eine Schicht aus einem zweiten thermoplastischen Material aufweist, das mit dem ersten Material physikalisch und chemisch kompatibel ist, um die Befestigung des Rahmens (2) an der geschmeidigen Folie (5) entlang der Umfangsbefestigungszone (6) zu ermöglichen.

**9.** Schablone nach Anspruch 8, **dadurch gekennzeichnet, daß** das erste thermoplastische Material ein Polyolefin ist, das insbesondere ausgewählt wird aus den Polyethylenen, den Polypropylenen, den Polyacetaten oder den Polycarbonaten.

**10.** Schablone nach Anspruch 8 oder 9, **dadurch gekennzeichnet, daß** die geschmeidige Folie (5) mindestens zwei Schichten aufweist, von denen eine erste mit dem zweiten thermoplastischen Material hergestellt wird, und von denen eine zweite Schicht, die insbesondere eine Dekorschicht bilden kann, aus einem Material wie zum Beispiel Papier oder Polyethylenterephthalat hergestellt wird.

**11.** Verwendung einer Schablone (1) nach einem der Ansprüche 1 bis 10 zum Schminken der Haare oder des Körpers.

**12.** Herstellungsverfahren für eine Schablone (1), die eine geschmeidige Folie (5) enthält, welche ein auf einer gewölbten Oberfläche wiederherzustellendes Motiv (9) trägt und von der eine sich in der Nähe eines Umfangsrands (4) befindliche Zone (6) an einem steifen Rahmen (2) in Form eines ringförmigen Elements befestigt ist, wobei das Verfahren darin besteht, den Rahmen (2) durch Formen eines ersten thermoplastischen Materials in einer Form (20) herzustellen, wobei in einer Ebene dieser Form die geschmeidige Folie (5) gehalten wird, die vorher auf die gewünschten Abmessungen und Form geformt und ausgeschnitten wurde, wobei die Folie (5) mindestens eine Schicht aus einem zweiten thermoplastischen Material aufweist, das mit dem ersten Material physikalisch und chemisch kompatibel ist, um die Befestigung des Rahmens (2) an der geschmeidigen Folie (5) entlang der Umfangsbefestigungszone (6) zu ermöglichen, wobei eine Verringerung des Umfangs des so an der geschmeidigen Folie (5) befestigten Rahmens (2) unter der Wirkung der "Nachschwindung" des ersten Materials die Bildung einer Kuppel (10) durch die geschmeidige Folie (5) innerhalb des Rahmens (2) hervorruft.

**13.** Verfahren nach Anspruch 12, **dadurch gekennzeichnet, daß** es darin besteht:

a) in einer Form (20) die geschmeidige Folie (5) anzuordnen, die vorher auf die gewünschten Abmessungen und Form geformt und ausgeschnitten wurde, wobei die Form (20) auf einer Temperatur gehalten wird, die unter der Erweichungstemperatur des zweiten thermoplastischen Materials liegt,

b) in eine ringförmige Zone (26) der Form unter Druck das erste thermoplastische Material einzuspritzen, um den Rahmen (2) zu bilden, wobei die ringförmige Zone (26) so angeordnet ist, daß beim Formen des Rahmens (2) die geschmeidige Folie (5) mit diesem letzteren (2) entlang der Umfangsbefestigungszone (6) verbunden wird, und

c) die Schablone (1) aus der Form zu nehmen.

**14.** Verfahren nach Anspruch 12 oder 13, **dadurch gekennzeichnet, daß** die geschmeidige Folie (5) in der Form (20) durch Ansaugen (23-25) an Ort und Stelle gehalten wird.

**15.** Verfahren nach einem der Ansprüche 12 bis 14, **dadurch gekennzeichnet, daß** die Form (20) auf einer Temperatur nahe 45° C gehalten wird, während das erste thermoplastische Material in die ringförmige Zone (26) der Form (20) mit einer Temperatur zwischen 180° C und 240° C eingespritzt wird.

**16.** Verfahren nach einem der Ansprüche 12 bis 15, **dadurch gekennzeichnet, daß** das erste thermoplastische Material ein Polyolefin ist, das insbesondere aus den Polyethylenen, den Polypropylenen, den Polyacetaten oder den Polycarbonaten ausgewählt wird.

17. Verfahren nach einem der Ansprüche 12 bis 16, **dadurch gekennzeichnet, daß** die geschmeidige Folie (5) mindestens zwei Schichten aufweist, von denen eine erste mit dem zweiten thermoplastischen Material hergestellt wird, und von denen eine zweite Schicht, die insbesondere eine Dekorschicht bilden kann, aus einem Material wie z.B. Papier oder Polyethylenterephthalat hergestellt wird.

1

5

6

4

8

10

9

2

7

## FIG.1A

1

10

9

5

2

## FIG.1B

EP 1 040 873 B1

FIG.2A

FIG.2B

FIG.2C

## FIG.3